# EUROPEAN PATENT SPECIFICATION

(11) **EP 1 821 557 B1**
(45) Date of publication and mention of the grant of the patent: **14.12.2011**
(21) Application number: 05805728.2
(22) Date of filing: 25.10.2005
(51) Int. Cl.: H04W 4/10, H04W 84/08

(54) **Method and device for implementing secret call service**
Verfahren und Einrichtung zum Implementieren eines Geheimanrufdienstes
Procédé et dispositif de mise en place d'un service d'appel secret

(30) Priority: 26.10.2004 CN 200410086363
(43) Date of publication of application: 22.08.2007
(73) Proprietor: Huawei Technologies Co., Ltd., Longgang District, Shenzhen Guangdong 518129 (CN)
(72) Inventor: XIA, Zhili, Huawei Administration Building, Shenzhen Guangdong 518129 (CN); CUI, Xiaochun, Huawei Administration Building, Shenzhen Guangdong 518129 (CN)
(74) Representative: Kreuz, Georg Maria
(86) International application number: PCT/CN2005/001762
(87) International publication number: WO 2006/045244

(56) References cited:
- EP-A1- 1 758 407
- JP-A- 10 032 534
- US-A1- 2003 153 339
- 3GPP: "TECHNICAL SPECIFICATION GROUP SERVICES AND SYSTEM ASPECTS; VOICE GROUP CALL SERVICE (VGCS)- STAGE 1 (RELEASE 6)" 3RD GENERATION PARTNERSHIP PROJECT;, 1 September 2004 (2004-09-01), - 1 September 2004 (2004-09-01) pages 1-15, XP002593699
- SIEMENS: "The railways Integrated Mobile Communication system" GSM-R, 4 May 1999 (1999-05-04), - 4 May 1999 (1999-05-04) pages 1-50, XP002593700

## Description

### Field of the Invention

The present invention relates to a digital trunked system, and more particularly, to a method and a device for performing a voice private call service (VPCS) based on a digital trunked system of a Global System for Mobile Communications (GSM).

### Background of the Invention

As a rather economical and flexible commanding and dispatching communication system recently developed, a trunked communication system is widely used in government agencies, energy units, transportation units, airports, docks, industrial and mining enterprises, fire and police stations, water conservancy and military units etc. to meet the demands for intercommunications of various units.

The trunked communication system, at the beginning, was often networked in a trunked private network manner. Since each trunked communication system was constructed independently, and the technologies and patterns among groups were various, such drawbacks as low utilization of frequencies, high cost of network construction and network maintenance had then been considered. Nowadays, along with the shift in the trunked communication technology from analogue technology to digital technology, the construction of the trunked communication network shows a trend from an independent private trunked network construction to a public trunked network construction. Special attention has been paid to the development of the trunked communication system based on the GSM communication network by the industry, as the GSM technology mechanism has been quite developed and has a wide public network basis all over the state or even around the world.

Presently, Europe has constituted a series of international standards for railway mobile communication, GSM-R, which uses the GSM communication network as a service bearer, so as to implement trunked communication services such as a basic Voice Group Call Service (VGCS) and Voice Broadcast Service (VBS), and may perform a basic voice dispatching call function. Voice Groupe Call Procedures are disclosed in 3GPP Technical Specification Group Services and System aspects Voice Group Call Service (UGCS) - Stage 1 (Release 6).

The trunked communication system has a Point-to-Point (PTP) VPCS which can not be implemented based on the GSM-R system for the following reasons.

The GSM-R provides VGCS and VBS voice dispatching services, but seldom provides a VPCS voice dispatching service.

The GSM-R is needed to store related information of Group Call Attributes to implement the VGCS and VBS of the GSM-R, which occupies network resources.

While the discontinuous reception of a Mobile Station (MS) is supported by the VGCS and VBS notification messages of the GSM-R, the performance of VGCS and VBS would be inferior. While the discontinuous reception of an MS is not supported, the standby duration of an MS is rather short.

Because a dispatching notification of the GSM-R is needed to be periodically broadcasted on a Notification Channel (NCH), the capacity of a NCH is badly limited. If a private call dispatching notification is transmitted on the NCH, the performance of VPCS can not be improved, while making a bad influence on the performance of VGCS and VBS.

The existing solutions for performing the VGCS and VBS of the GSM-R are not very suitable for the VPCS.

### Summary of the Invention

Embodiments of the present invention provide a method for performing a voice private call service (VPCS), to solve the problem of a lack of a technical solution for performing a VPCS based on the GSM-R in the prior art.

The Scope of the invention is defined by the appended independent claims.

### Brief Description of the Drawings

Fig. 1 shows a flow chart of a VPCS being set up successfully in accordance with a first embodiment of the present invention.
Fig. 2 shows a flow chart when a calling assignment fails in accordance with a second embodiment of the present invention.
Fig. 3 shows a flow chart when a called assignment fails in accordance with a third embodiment of the present invention.
Fig. 4 shows a flow chart when a network side does not receive a called response upon the expiry of a timer in accordance with a fourth embodiment of the present invention.
Fig. 5 is a diagram illustrating the architecture of a device in accordance with an embodiment of the present invention.

### Detailed Description of the Invention

Embodiments of the present invention are hereinafter described in detail with reference to the accompanying drawings.

The present invention is applied to the 800M digital trunked system based on the GSM mechanism (i.e., GT800 system). Embodiments of the present invention include: adopting the group call design principle of the GSM-R in the design of the functional characteristic of Push-to-Talk (PTT) of VPCS, and following the Mobile Station ISDN Number (MSISDN) numbering scheme of the GSM system to number a VPCS subscriber; treating a calling service subscriber and a called service subscriber as a temporary group call during a VPCS, using a PCH of all cells in a location area where the called MS is located other than a NCH to issue paging messages in a signalling process and channel assignment, and paging the called MS of the VPCS using the IMSI and TMSI, thereby avoiding the influence of the limitation of the NCH capacity on the performances of the VPCS, VGCS and VBS. After receiving a private paging message, a called MS of the VPCS initiates a paging response process to the network side, and the network side sends an assignment command after a private paging response process, so as to assign a group call channel to a called MS of the VPCS. In accordance with embodiments of the present invention, a voice group call channel is allocated only in the cells where the calling MS and the called MS of the VPCS are located currently, no matter during the process of initiating a VPCS or the process of performing the VPCS. Moreover, a same group call channel, for example, Traffic Channel (TCH), is shared by the calling MS of VPCS and the called MS of VPCS when the calling MS and the called MS of the VPCS are located in a same cell.

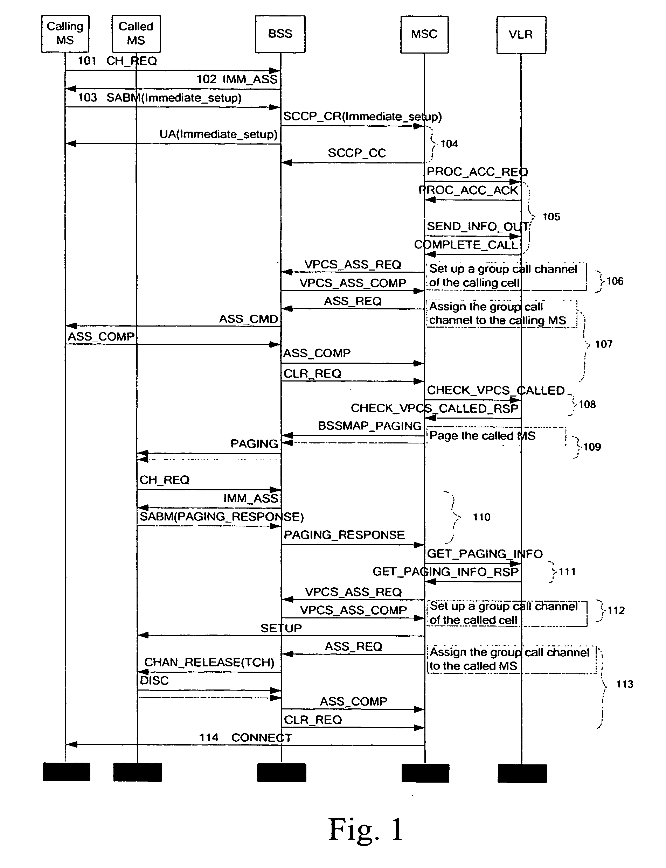

In accordance with a first embodiment of the present invention, a VPCS is supposed to be set up successfully. Referring to Fig. 1, the specific process of the first embodiment of the present invention includes the following steps.

Step 101: when a mobile terminal needs to initiate a VPCS, a subscriber of the mobile terminal inputs a called mobile terminal number and press a PTT key; when monitoring that the PTT key is pressed, the mobile terminal as a calling Mobile Station (MS) sends a channel request message (CH_REQ) to an access network device, namely a Base Station Subsystem (BSS), and setting up a connection with the base station side through an air interface via a dedicated channel, and request the BSS to assign a dedicated signalling channel for transmitting signalling. The dedicated signalling channel may be a Stand-alone Dedicated Control Channel (SDCCH) or a Traffic Channel (TCH).

Step 102: the BSS allocates the dedicated signalling channel for the calling MS, and assigns the dedicated signalling channel to the calling MS through an immediate assignment message (IMM_ASS).

Call performance can be obviously improved by using an immediate setup process, for example, using an immediate setup message, hereafter referred to as IMMEDIATE_SETUP, including all private call setup information in an initial complete layer 3 request message. The immediate setup process is given in the following Steps 103 and 104.

The IMMEDIATE_SETUP indicates that the type of service is VPCS, and includes VPN numbers, and VPN short numbers of a calling service subscriber and a called service subscriber, or MSISDN information of the calling service subscriber and the called service subscriber. The VPN refers to a trunked virtual dedicated network. The GT800 system can support multiple VPNs. The numbers of the called MS may be inputted by a subscriber.

Step 103: the calling MS sends to the BSS an immediate setup connection message, hereafter referred to as SABM (immediate_setup), to request to set up a Signalling Connection Control Part (SCCP) connection between the BSS and a Mobile Switching Centre (MSC) of the core network through an A interface.

The SABM (immediate_setup) indicates that the type of service is VPCS, and includes VPN numbers and VPN short numbers of a calling service subscriber and a called service subscriber, or MSISDN information of the calling service subscriber and the called service subscriber. The MSC can determine whether a number is a short number or an MSISDN according to the length of the number. The GT800 system can support multiple VPNs. The numbers of the called MS may be inputted by a subscriber.

Step 104: the BSS continues to send to the MSC an SCCP connection request message, hereafter referred to as SCCP_CR (immediate_setup); the MSC sets up an SCCP connection for the VPCS of the calling MS after receiving the SCCP_CR (immediate_setup), and returns to the BSS an SCCP connection setup confirmation message, hereafter referred to as SCCP_CC; and the BSS further sends an SCCP connection setup confirmation message, hereafter referred to as UA (immediate_setup) to the calling MS.

Step 105: the MSC communicates with a Visited Location Register (VLR) to obtain VPCS information of the calling MS, which includes a calling MS number and so on. VPCS information of the MS is preset in the VLR.

The messages communicated between the MSC and the VLR include a processing access request message, hereafter referred to as PROC_ACC_REQ, and a processing access acknowledgement message, hereafter referred to as PROC_ACC_ACK, as well as a sending information out message, hereafter referred to as SEND_INFO_OUT, and a completing call message, hereafter referred to as COMPLETE_CALL, through which the MSC can obtain the VPCS information of the calling MS from the VLR. The SEND_INFO_OUT indicates that the type of service is VPCS. The COMPLETE_CALL indicates whether the calling MS has subscribed to the VPCS; if the calling MS has subscribed to the VPCS, the COMPLETE_CALL further includes a VPN number of the calling service subscriber and a VPN short number information of the calling service subscriber.

Step 106: the MSC instructs the BSS to allocate a group call channel for the calling MS upon receipt of the VPCS information of the calling MS.

The process specifically includes: the MSC sets up a temporary group call reference for the current VPCS, i.e. a private call reference, and the calling MS and the called MS are treated as a temporary group call identified by the private call reference; the MSC instructs the BSS to allocate the group call channel through a group call channel assignment request message, hereafter referred to as VPCS_ASS_REQ, (i.e. a private call assignment request), which includes the private group call reference and information of the cell in which the calling MS is located, hereafter referred to as the calling cell; the MSC sets up a resources SCCP connection thereof; after receiving the VPCS_ASS_REQ, the BSS allocates the group call channel for the cell in which the calling MS is located, hereafter referred to as the called cell, allocates a group call channel inside the BSS, and performs a channel activation process; the BSS returns to the MSC a group call channel assignment completion message, hereafter referred to as VPCS_ASS_COMP (i.e., a private call assignment completion), after allocating the group call channel; and the MSC confirms that the group channel assignment is completed after receiving the VPCS_ASS_COMP message.

Step 107: the MSC instructs the BSS to assign the allocated group call channel to the calling MS, and the BSS instructs the MSC to clear the dedicated signalling channel set up for the calling MS after the assignment is completed.

The process specifically includes: the MSC sends to the BSS an assignment request message, hereafter referred to as ASS_REQ, including the private call reference and a Talker information element (i.e., an information unit in a message); the BSS sends an assignment command, hereafter referred to as ASS_CMD, to the calling MS through the dedicated signalling channel to assign the allocated group call channel to the calling MS; the calling MS returns to the BSS an assignment completion message (ASS_CMP) through the TCH group call channel after the assignment is completed. By far, the calling MS enters a group call sending mode, that is, the voice from the calling MS can be transmitted to the network side. At last, the BSS respectively sends to the MSC an assignment completion message (ASS_COMP) and a clearing dedicated signalling channel request message (CLR_REQ) which is used for clearing the dedicated signalling channel set up for the calling MS.

Step 108: the MSC checks the authority of the called MS by communicating with the VLR.

The process specifically includes: the MSC sends to the VLR a checking VPCS called message hereafter referred to as CHECK_VPCS_CALLED, for checking the authority of the called MS in the group call; and the VLR sends the condition of the authority of the called MS to the MSC through a checking VPCS called response message, hereafter referred to as CHECK_VPCS_CALLED_RSP,

The CHECK_VPCS_CALLED includes a VPN number of a calling service subscriber and a VPN short number of a called service subscriber, if the called number dialled by the calling service subscriber is a VPN short number, namely the call is a VPCS within the VPN; while the CHECK_VPCS_CALLED includes an MSISDN of the called service subscriber if the called number dialled by the calling service subscriber is an MSISDN.

The CHECK_VPCS_CALLED_RSP indicates whether the called service subscriber has subscribed to a VPCS; if the called service subscriber has subscribed to the VPCS, the CHECK_VPCS_CALLED_RSP includes information of the location area where the called MS is located, a VPN number of the called service subscriber and a VPN short number of the called service subscriber.

Step 109: the MSC pages the called MS through Paging Channels (PCHs) of all the cells in the location area where the called MS is located.

The process specifically includes: the MSC sends a connectionless private paging request message, hereafter referred to as BSSMAP_PAGING, to the BSS; and the BSS implements the paging process of the called MS according to a normal paging process based on the GSM mechanism upon receipt of the BSSMAP_PAGING, that is, sends to the called MS a PAGING message which is generally the same as that in the GSM normal paging process except for implementing the paging through the PCH in the cell.

Step 110: after having been paged, the called MS sends to the BSS a channel request message, hereafter referred to as CH_REQ, which is the channel request from the called MS for responding the paging; the BSS allocates a dedicated signalling channel for the called MS, and assigns the dedicated signalling channel to the called MS through the IMM_ASS; the called MS sends through the dedicated signalling channel a link establishment message, hereafter referred to as SABM (PAGING_RESPONSE), which is a paging response message submitted by the called MS; and the BSS forwards the SABM (PAGING_RESPONSE) to the MSC through the PAGING_RESPONSE upon receipt of the SABM (PAGING_RESPONSE).

Step 111: the MSC acquires the VPCS information of the called MS from the VLR.

The process specifically includes: the MSC requests the VPCS information of the called MS through a getting paging information message, hereafter referred to as GET_PAGING_INFO; and the VLR returns the VPCS information of the called MS to the MSC through a getting paging information response message, hereafter referred to as GET_PAGING INFO_RSP.

Step 112: the MSC sends to the BSS a group call channel assignment request message with regard to the called MS, that is, a private assignment request message, hereafter referred to as VPCS_ASS_REQ, including the private call reference of the VPCS, and information of the called cell; the MSC sets up a resources SCCP connection thereof; and the BSS allocates a group call channel for the called MS upon receipt of the VPCS_ASS_REQ, and confirms that the group call channel allocation is completed through a private assignment request response, hereafter referred to as VPCS_ASS_COMP, after having allocated the group call channel.

Step 113: the MSC informs the called MS that the current call is a VPCS through a setup message hereafter referred to as SETUP; the MSC further sends to the BSS an assignment request message, hereafter referred to as ASS_REQ, including the private call reference but not including the Talker information element; the BSS instructs the called MS to releases the allocated dedicated signalling channel through a channel release message, hereafter referred to as CHAN_RELEASE (TCH), and the CHAN_RELEASE (TCH) contains the information of the group call channel allocated for the called cell; after the allocated group call channel is assigned to the called MS, the called MS sends a disconnect (DISC) message to release the dedicated signalling channel and switches to the group call channel allocated for the called MS to enter the group call receiving mode; and the BSS sends to the MSC a called MS assignment completion message, hereafter referred to as ASS_COMP, after receiving the DISC message, and sends a clearing message, hereafter referred to as CLR_REQ, to clear the dedicated signalling channel and the SCCP connection set up for the called MS.

Step 114: the MSC sends to the calling MS a connection notification, hereafter referred to as CONNECT, the CONNECT including the information indicating that the called MS of the VPCS is in position, that is, indicates that the calling MS can start to speak. So far, the calling MS and the called MS may perform the VPCS through the group call channels allocated for them.

The process of VPCS assignment of the called MS in accordance with the present embodiment of the present invention is omitted, that is, Step 112 is omitted, if the calling MS and the called MS are in a same cell. The MSC sends the SETUP to the called MS and sends the assignment request message to the BSS through a called paging response dedicated connection SCCP, to assign the group call channel allocated for the calling MS to the called MS and implement Step 114, and the assignment request message includes the private call reference and the cell information but does not include the Talker information element. Moreover, after the group call channel is assigned to the calling MS, the dedicated signalling channel is released, and the called paging response dedicated connection SCCP connection is cleared.

In accordance with the embodiment of the present invention, the dedicated signalling channel assigned may be the SDCCH or the TCH. If the TCH is adopted, the process may be accelerated; moreover, if the dedicated signalling channel assigned is the TCH, when the MSC assignment command is received, instead of the process of modifying the mode, the process of allocating other group calls in the calling cell and the assignment process are implemented, so that the calling MS is switched to the group call channel from the TCH assigned; and the TCH assigned is released. Alternatively, other group call channel may not be allocated, while the process of modifying the mode is performed directly to change the TCH into a group call channel.

In accordance with the embodiment of the present invention, the signalling process in the case of a failure of establishment of the VPCS includes at least three situations, which are illustrated in a second embodiment, a third embodiment, and a fourth embodiment respectively. The second embodiment gives the signalling process in the case of failing to assign a group call channel to the calling MS. The third embodiment gives the signalling process in the case of failing to assign a group call channel to the called MS. The fourth embodiment gives the signalling process in the case that the failure of the network side does not receive the response from the called MS upon the expiry of a timer, namely failing to page the called MS. If the above three situations occur in the establishment of the VPCS, it is needed to release the set up connection and occupied channel resources. The specific processing manners for the three situations are respectively as follows.

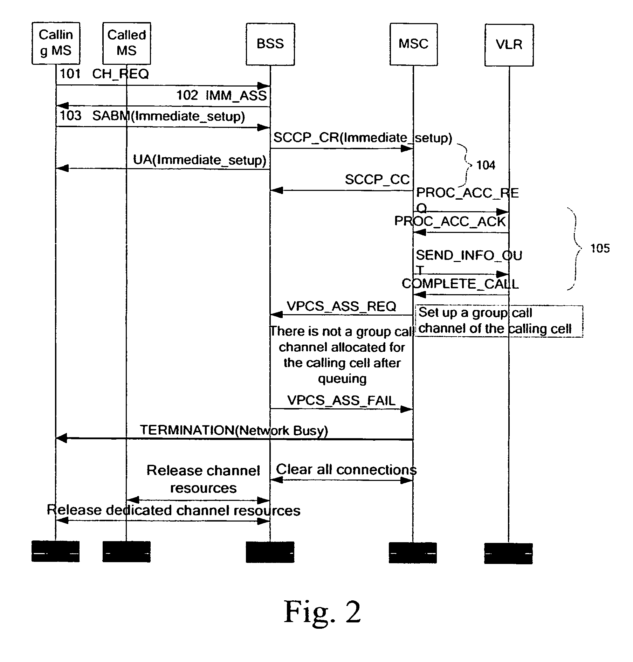

The signalling process in the case of failing to page the calling MS is given in the second embodiment of the present invention. As shown in Fig. 2, the signalling process specifically includes the following steps.

In the second embodiment, compared to the first embodiment of the present invention, the parallel points are the above steps 101 to 105. There is a kind of circumstance that,, in process of assigning a group call channel to the calling MS, a queuing process is performed when no channel to be allocated after the MSC instructs the BSS to allocate a group call channel for the MS. If there is no channel to be allocated till the expiry of a queuing timer, the BSS sends to the MSC an assignment failure command (VPCS_ASS_FAIL) including information element indicating that the network is busy. The MSC sends to the calling MS a termination message (TERMINATION) including information element indicating that the network is busy, and clears all connections (including the connection for the called MS response). And the BSS releases all allocated channel resources including the dedicated channel resources.

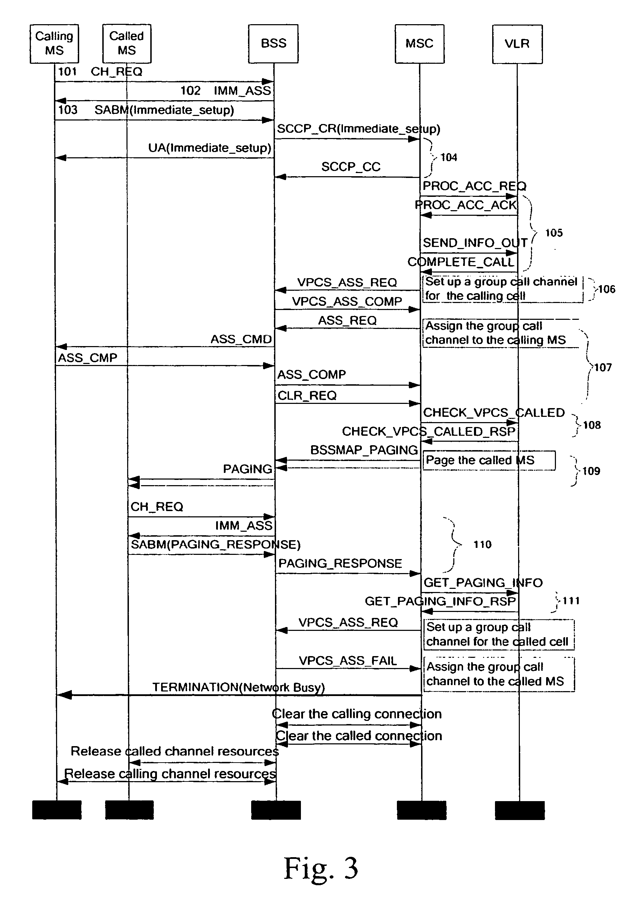

The signalling process in the case of failing to assign a group call channel to the called MS is given in the third embodiment. As shown in Fig. 3, the process specifically includes the following steps.

In the third embodiment, compared to the first embodiment of the present invention, the parallel points are the above steps 101 to 111. In the process of assigning a group call channel to the called MS, a queuing process is performed if there is no channel to be allocated after the MSC instructs the BSS to allocate a group call channel for the MS. If there is still no channel to be allocated upon the expiry of a queuing timer, the BSS sends to the MSC an assignment failure command, hereafter referred to as VPCS_ASS_FAIL. The MSC sends to the calling MS a termination message, hereafter referred to as TERMINATION, upon receipt of the information of failing to assign the group call channel to the called MS, and clears all connections (including the related connections of the calling MS and the called MS). And the BSS releases all allocated channel resources including the calling and called channel resources.

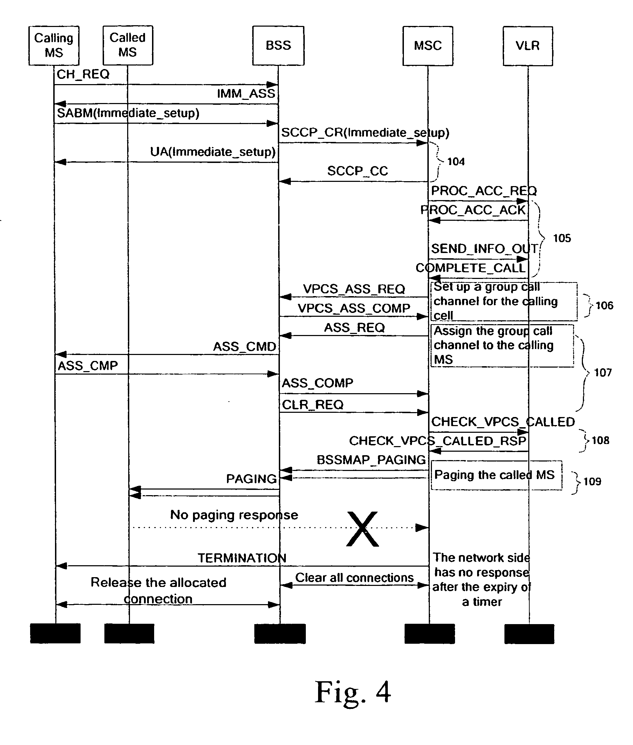

The signalling process in the case that the network side does not receive the response from the called MS upon the expiry of a timer is given in the fourth embodiment of the present invention. As shown in Fig. 4, the signalling process specifically includes the following steps.

In the fourth embodiment, compared to the first embodiment of the present invention, the parallel points are the above steps 101 to 109. Under the circumstance that the MSC does not receive the paging response from the called MS upon the expiry of a paging timer, the MSC sends the TERMINATION to the MS, containing a called MS no-response information element and clears all related connections to the calling MS. The BSS releases the channel resources allocated for the calling MS.

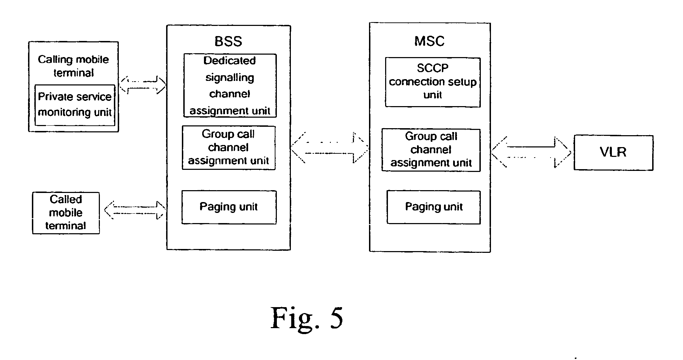

Based on the above disclosed embodiments, the present invention also discloses a device for performing a VPCS based on a digital trunked system of GSM, which uses the above method to perform the VPCS in the GSM system. Fig. 5 is a diagram illustrating the architecture of the device in accordance with an embodiment of the present invention.

As shown in Fig. 5, the device includes:
a dedicated signalling channel assignment unit, set in a BSS, for assigning a dedicated signalling channel to the VPCS;
an SCCP connection setup unit, set in an MSC, for setting up an SCCP connection between an access network and a core network for the VPCS;
a paging unit, set in the BSS and the MSC, for paging the called MS of the VPCS through a PCH;
a group call channel assignment unit, set in the MSC and the BSS, for allocating for the calling MS a group call channel for transmitting information, and assigning the group call channel allocated for the calling MS to the calling MS, according to the dedicated signalling channel and the SCCP connection which have been set up; allocating for the called MS a group call channel for receiving information, and assigning the group call channel allocated for the called MS to the called MS after the paging unit has paged the called MS; and instructing the calling MS and the called MS to perform the VPCS through the group call channel allocated for them after the assignment is completed; and
a VLR, for storing VPCS information, checking the current VPCS, and instructing the paging unit and the group call channel assignment unit to perform the VPCS after the VPCS passes the checking.

Since the VPCS is performed by using a PTT key in accordance with the embodiment of the present invention, the MS further includes a private call service monitoring unit for monitoring whether the PTT key is activated; if the PTT key is activated, a number input through the PTT key is acted as a called number, and the VPCS is initiated to the network side.

## Claims

1. A method for performing a voice private call service (VPCS), applicable in a digital trunked system based on Global System for Mobile Communications (GSM), comprising:
assigning a group call channel to a calling Mobile Station (MS) for transmitting information, in response to initiating a VPCS by the calling MS; **characterized by**
paging a called MS through a Paging Channel (PCH); -
assigning a group call channel to the called MS for receiving the information; and
connecting the calling MS and the called MS through the group call channel assigned to the calling MS and the group call channel assigned to the called MS.

2. The method of Claim 1, wherein the assigning a group call channel to a calling MS for transmitting information, in response to initiating a VPCS by the calling MS comprises:
requesting, by the calling MS, an access network to assign a dedicated signalling channel to the calling MS;
requesting, through the dedicated signalling channel, the access network to set up a Signalling Connection Control Part (SCCP) connection between the access network and a core network; and
assigning, by a network side, via the dedicated signalling channel and the SCCP connection, the group call channel to the calling MS for transmitting information.

3. The method of Claim 2, wherein:
the requesting the access network to assign the dedicated signalling channel to the calling MS comprises:
sending, by the calling MS, through a Push-to-Talk (PTT) key, a channel request message to a Base Station Sub-system (BSS); and
the requesting the access network to set up the SCCP connection between the access network and the core network through the dedicated signalling channel comprises:
assigning, by the BSS, the dedicated signalling channel to the calling MS;
initiating, by the calling MS, the VPCS to the BSS through the dedicated signalling channel; and
requesting, by the BSS, a Mobile Switching Centre (MSC) of the core network to set up the SCCP connection of the VPCS between the BSS and the MSC.

4. The method of Claim 3, wherein the initiating the VPCS to the BSS through the dedicated signaling channel comprises:
sending, by the calling MS, through the dedicated signalling channel, to the BSS a message containing the calling number and the called number, wherein the type of the message sent from the calling MS is VPCS.

5. The method of Claim 4, wherein the calling number comprises:
Virtual Private Network (VPN) number and VPN short number, or Mobile Station ISDN Number (MSISDN); and
the called number comprises:
Virtual Private Network (VPN) number and VPN short number, or Mobile Station ISDN Number (MSISDN).

6. The method of Claim 2, 3, 4 or 5, wherein when the calling MS and called MS are in a same cell,
the assigning the group call channel to the calling MS via the dedicated signalling channel and the SCCP connection comprises:
allocating the group call channel for the calling MS via the dedicated signalling channel and the SCCP connection, and assigning the group call channel to the calling MS; and
the process of paging the called MS through the PCH comprises:
paging the called MS through the PCH, and assigning the group call channel allocated for the calling MS to the called MS upon receipt of a paging response message returned by the called MS.

7. The method of Claim 6, further comprising:
releasing the dedicated signalling channel and clearing the SCCP connection after the group call channel is assigned to the calling MS.

8. The method of Claim 2, 3, 4 or 5, wherein when the calling MS and the called MS are in different cells respectively,
the assigning the group call channel to the calling MS via the dedicated signalling channel and the SCCP connection comprises:
allocating, via the dedicated signaling channel and the SCCP connection, the group call channel in the calling cell for the calling MS, and assigning the group call channel to the calling MS;
the paging the called MS through the PCH comprises:
paging the called MS through the PCH, setting up a called dedicated signaling channel, setting up a called SCCP connection upon receipt of a paging response message from the called MS, and allocating a group call channel for the called MS in the called cell through the called dedicated signalling channel and the called SCCP connection; and
the assigning the group call channel to the called MS for receiving the information comprises:
assigning the group call channel allocated for the called MS to the called MS in the called cell.

9. The method of Claim 8, wherein:
the allocating the group call channel in the calling cell for the calling MS comprises:
acquiring, by the MSC of the core network, a calling MS number from a Visited Location Register (VLR), and initiating a group call channel assignment request to the BSS of the access network;
allocating, by the BSS, the group call channel for the calling MS, and returning to the MSC a response message; and
the assigning the group call channel to the calling MS comprises:
sending, by the MSC, to the BSS a request for assigning the group call channel allocated for the calling MS to the calling MS; and assigning, by the BSS, the group call channel allocated for the calling MS to the calling MS by issuing an assignment command to the calling MS.

10. The method of Claim 8, wherein:
the paging the called MS through the PCH comprises:
instructing, by the MSC of the core network, the BSS of the access network to page the called MS after the MSC of the core network acquires a called MS number from the VLR;
interacting, by the BSS, with the called MS to implement the paging procedure, and returning to the MSC the paging response message; and
the allocating the group call channel for the called MS in the called cell comprises:
instructing, by the MSC, the BSS to allocate a group call channel for the called MS in the called cell, and assigning, through an assignment command, the group call channel allocated for the called MS to the called MS in the called cell.

11. The method of Claim 8, further comprising:
releasing the called dedicated signalling channel and clearing the called SCCP connection after the group call channel allocated for the called MS is assigned to the called MS in the called cell.

12. The method of Claim 2, 3, 4 or 5, wherein the dedicated signalling channel is a Standalone Dedicated Control Channel (SDCCH) or a Traffic Channel (TCH) in the GSM.

13. The method of Claim 2, 3,4 or 5, wherein the dedicated signalling channel is a TCH in the GSM; the TCH is treated as the group call channel; and the TCH is assigned to the calling MS for transmitting information.

14. The method of Claim 1, 2, 3, 4 or 5, further comprising:
generating temporary group call reference information for the calling MS and the called MS of the current VPCS; wherein the calling MS and the called MS are treated as a temporary group call during the VPCS.

15. The method of Claim 1, 2,3, 4 or 5, further comprising:
clearing all connections which have been set up and releasing all channel resources occupied upon a failure of establishment of the VPCS.

16. The method of Claim 15, wherein the failure of establishment of the VPCS comprises: failing to assign the group call channel to the calling MS, failing to assign the group call channel to the called MS, or failing to page the called MS.

17. A device for performing a voice private call service (VPCS), applicable in a digital trunked system of GSM, comprising:
a dedicated signalling channel assignment unit, set in a BSS, for assigning a dedicated signalling channel to the VPCS;
an SCCP connection setup unit, set in an MSC, for setting up an SCCP connection between an access network and a core network for the VPCS; **characterized by**
a paging unit, set in the BSS and MSC, for paging the called MS of the VPCS via a paging channel, PCH;
a group call channel assignment unit, set in the MSC and the BSS, for allocating for the calling MS a group call channel for transmitting information, and assigning the group call channel allocated for the calling MS to the calling MS, according to the dedicated signalling channel and the SCCP connection; allocating for the called MS a group call channel for receiving information, and assigning the group call channel allocated for the called MS to the called MS, after the paging unit has paged the called MS; and instructing the calling MS and called MS to perform the VPCS through the group call channels allocated for them respectively after the assignment is completed.

18. The device of Claim 17, further comprising a VLR for storing VPCS information, checking the current VPCS, and instructing the paging unit and group call channel assignment unit to perform the VPCS after the VPCS passes the checking.

19. The device of Claim 17, further comprising a private call service monitoring unit for monitoring whether the PTT key is activated; and if the PTT key is activated, treating the number input through the PTT key as the called number, and initiating the VPCS to the network side.

20. A Base Station Sub-system (BSS), comprising:
a dedicated signalling channel assignment unit, for assigning a dedicated signalling channel to a voice private call service (VPCS); **characterized by**
a paging unit, for paging the called MS of the VPCS via a Paging Channel (PCH);
a group call channel assignment unit, for allocating for the calling MS a group call channel for transmitting information, and assigning the group call channel allocated for the calling MS to the calling MS; allocating for the called MS a group call channel for receiving information and assigning the group call channel allocated for the called MS to the called MS, after the paging unit has paged the called MS.

21. A Mobile Switching Centre (MSC), comprising:
a Signalling Connection Control Part (SCCP) connection setup unit, for setting up an SCCP connection between an access network and a core network for a voice private call service (VPCS); **characterized by**
a paging unit, for paging the called MS of the VPCS via a Paging Channel (PCH);
a group call channel assignment unit, for sending a request for allocating a group call channel for the calling MS for transmitting information, and assigning the group call channel allocated for the calling MS to the calling MS; sending a request for allocating a group call channel for the called MS for receiving information and assigning the group call channel allocated for the called MS to the called MS, after the paging unit has paged the called MS; and instructing the calling MS and called MS to perform the VPCS through the group call channels allocated for them respectively after the assignment is completed.

## Patentansprüche

1. Verfahren zum Durchführen eines Voice Private Call Service bzw. VPCS, das in einem digitalen gebündelten System auf der Basis des Global System for Mobile Communications bzw. GSM anwendbar ist, mit den folgenden Schritten:
Vergeben eines Gruppenanrufkanals an eine anrufende Mobilstation bzw. MS zum Übertragen von Informationen als Reaktion auf das Einleiten eines VPCS durch die anrufende MS; **gekennzeichnet durch**:
Paging einer angerufenen MS **durch** einen Paging-Kanal bzw. PCH;
Vergeben eines Gruppenanrufkanals an die angerufene MS zum Empfangen der Informationen; und
Verbinden der anrufenden MS und der angerufenen MS **durch** den an die anrufende MS vergebenen Gruppenanrufkanal und den an die angerufene MS vergebenen Gruppenanrufkanal.

2. Verfahren nach Anspruch 1, wobei das Vergeben eines Gruppenanrufkanals an eine anrufende MS zum Übertragen von Informationen als Reaktion auf das Einleiten eines VPCS durch die anrufende MS Folgendes umfasst:
Auffordern eines Zugangsnetzes durch die anrufende MS, einen dedizierten Signalisierungskanal an die anrufende MS zu vergeben;
Auffordern des Zugangsnetzes durch den dedizierten Signalisierungskanal, eine Verbindung des Signalling Connection Control Part bzw. SCCP zwischen dem Zugangsnetz und einem Kernnetz aufzubauen; und
Vergeben des Gruppenanrufkanals durch eine Netzseite über den dedizierten Signalisierungskanal und die SCCP-Verbindung zu der anrufenden MS zum Übertragen von Informationen.

3. Verfahren nach Anspruch 2, wobei
das Auffordern des Zugangsnetzes, den dedizierten Signalisierungskanal an die anrufende MS zu vergeben, Folgendes umfasst:
Senden einer Kanalanforderungsnachricht zu einem Basisstations-Subsystem bzw. BSS durch die anrufende MS durch eine Taste für Push-to-Talk bzw. PTT; und
das Auffordern des Zugangsnetzes, die SCCP-Verbindung zwischen dem Zugangsnetz und dem Kernnetz aufzubauen, durch den dedizierten Signalisierungskanal Folgendes umfasst:
Vergeben des dedizierten Signalisierungskanals durch das BSS an die anrufende MS;
Einleiten des VPCS zu dem BSS durch die anrufende MS durch den dedizierten Signalisierungskanal; und
Auffordern einer Mobilvermittlungsstelle bzw. MSC des Kernnetzes durch das BSS, die SCCP-Verbindung des VPCS zwischen dem BSS und der MSC aufzubauen.

4. Verfahren nach Anspruch 3, wobei das Einleiten des VPCS zu dem BSS durch den dedizierten Signalisierungskanal Folgendes umfasst:
Senden einer Nachricht durch die anrufende MS zu dem BSS durch den dedizierten Signalisierungskanal, die die anrufende Nummer und die angerufene Nummer enthält, wobei der Typ der von der anrufenden MS gesendeten Nachricht VPCS ist.

5. Verfahren nach Anspruch 4, wobei die anrufende Nummer Folgendes umfasst:
Nummer des Virtual Private Network bzw. VPN und VPN-Kurznummer oder Mobile Station ISDN Number bzw. MSISDN; und
die angerufene Nummer Folgendes umfasst:
Nummer des Virtual Private Network bzw. VPN und VPN-Kurznummer oder Mobile Station ISDN Number bzw. MSISDN.

6. Verfahren nach Anspruch 2, 3, 4 oder 5, wobei, wenn sich die anrufende MS und die angerufene MS in einer selben Zelle befinden,
das Vergeben des Gruppenanrufkanals an die anrufende MS über den dedizierten Signalisierungskanal und die SCCP-Verbindung Folgendes umfasst:
Zuteilen des Gruppenanrufkanals für die anrufende MS über den dedizierten Signalisierungskanal und die SCCP-Verbindung und Vergeben des Gruppenanrufkanals an die anrufende MS; und
der Prozess des Paging der angerufenen MS durch den PCH Folgendes umfasst:
Paging der angerufenen MS durch den PCH und Vergeben des für die anrufende MS zugeteilten Gruppenanrufkanals an die angerufene MS bei Empfang einer durch die angerufene MS zurückgegebenen Paging-Antwortnachricht.

7. Verfahren nach Anspruch 6, ferner mit dem folgenden Schritt:
Freigeben des dedizierten Signalisierungskanals und Löschen der SCCP-Verbindung, nachdem der Gruppenanrufkanal an die anrufende MS vergeben ist.

8. Verfahren nach Anspruch 2, 3, 4 oder 5, wobei, wenn sich die anrufende MS und die angerufene MS jeweils in verschiedenen Zellen befinden,
das Vergeben des Gruppenanrufkanals an die anrufende MS über den dedizierten Signalisierungskanal und die SCCP-Verbindung Folgendes umfasst:
Zuteilen des Gruppenanrufkanals in der anrufenden Zelle für die anrufende MS über den dedizierten Signalisierungskanal und die SCCP-Verbindung und Vergeben des Gruppenanrufkanals an die anrufende MS;
wobei das Paging der angerufenen MS durch den PCH Folgendes umfasst:
Paging der angerufenen MS durch den PCH, Aufbauen eines angerufenen dedizierten Signalisierungskanals, Aufbauen einer angerufenen SCCP-Verbindung bei Empfang einer Paging-Antwortnachricht von der angerufenen MS und Zuteilen eines Gruppenanrufkanals für die angerufene MS in der angerufenen Zelle durch den angerufenen dedizierten Signalisierungskanal und die angerufene SCCP-Verbindung; und
das Vergeben des Gruppenanrufkanals an die angerufene MS zum Empfangen der Informationen Folgendes umfasst:
Vergeben des für die angerufene MS zugeteilten Gruppenanrufkanals an die angerufene MS in der angerufenen Zelle.

9. Verfahren nach Anspruch 8, wobei
das Zuteilen des Gruppenanrufkanals in der anrufenden Zelle für die anrufende MS Folgendes umfasst:
Beschaffen einer anrufenden MS-Nummer durch die MSC des Kemnetzes aus einem Visited Location Register bzw. VLR und Einleiten einer Gruppenanrufkanal-Vergabeanforderung an das BSS des Zugangsnetzes;
Zuteilen des Gruppenanrufkanals für die anrufende MS durch das BSS und Zurücksenden einer Antwortnachricht an die MSC;
das Vergeben des Gruppenanrufkanals an die anrufende MS Folgendes umfasst:
Senden einer Anforderung zum Vergeben des für die anrufende MS zugeteilten Gruppenanrufkanals an die anrufende MS durch die MSC an das BSS; und Vergeben des für die anrufende MS zugeteilten Gruppenanrufkanals an die anrufende MS durch das BSS durch Ausgeben eines Vergabebefehls an die anrufende MS.

10. Verfahren nach Anspruch 8, wobei
das Paging der angerufenen MS durch den PCH Folgendes umfasst:
Anweisen des BSS des Zugangsnetzes durch die MSC des Kernnetzes, die angerufene MS zu pagen, nachdem die MSC des Kemnetzes eine angerufene MS-Nummer aus dem VLR beschafft;
Interaktion mit der angerufenen MS durch das BSS, um die Paging-Prozedur zu implementieren, und Zurücksenden der Paging-Antwortnachricht an die MSC; und
das Zuteilen des Gruppenanrufkanals für die angerufene MS in der angerufenen Zelle Folgendes umfasst:
Anweisen des BSS durch die MSC, einen Gruppenanrufkanal für die angerufene MS in der angerufenen Zelle zuzuteilen und Vergeben des für die angerufene MS zugeteilten Gruppenanrufkanals an die angerufene MS in der angerufenen Zelle durch einen Vergabebefehl.

11. Verfahren nach Anspruch 8, ferner mit den folgenden Schritten:
Freigeben des angerufenen dedizierten Signalisierungskanals und Löschen der angerufenen SCCP-Verbindung, nachdem der für die angerufene MS zugeteilte Gruppenanrufkanal an die angerufene MS in der angerufenen Zelle vergeben ist.

12. Verfahren nach Anspruch 2, 3, 4 oder 5, wobei der dedizierte Signalisierungskanal ein Standalone Dedicated Control Channel bzw. SDCCH oder ein Traffic Channel bzw. TCH im GSM ist.

13. Verfahren nach Anspruch 2, 3, 4 oder 5, wobei der dedizierte Signalisierungskanal ein TCH im GSM ist; der TCH als der Gruppenanrufkanal behandelt wird; und der TCH zum Übertragen von Informationen an die anrufende MS vergeben wird.

14. Verfahren nach Anspruch 1, 2, 3, 4 oder 5, ferner mit dem folgenden Schritt:
Erzeugen von Temporär-Gruppenanrufreferenzinformationen für die anrufende MS und die angerufene MS des aktuellen VPCS; wobei die anrufende MS und die angerufene MS während des VPCS als ein Temporär-Gruppenanruf behandelt werden.

15. Verfahren nach Anspruch 1, 2, 3, 4 oder 5, ferner mit den folgenden Schritten:
Löschen aller Verbindungen, die aufgebaut wurden, und Freigeben aller Kanalbetriebsmittel, die auf einen Fehlschlag der Herstellung des VPCS hin belegt sind.

16. Verfahren nach Anspruch 15, wobei der Fehlschlag der Herstellung des VPCS Folgendes umfasst: Fehlschlagen des Vergebens des Gruppenanrufkanals an die anrufende MS, Fehlschlagen des Vergebens des Gruppenanrufkanals an die angerufene MS oder Fehlschlagen des Paging der angerufenen MS.

17. Einrichtung zum Durchführen eines Voice Private Call Service bzw. VPCS, die in einem digitalen gebündelten System des GSM anwendbar ist, umfassend:
eine in einem BSS angeordnete Dedizierter-Signalisierungskanal-Vergabeeinheit zum Vergeben eines dedizierten Signalisierungskanals an den VPCS;
eine in einer MSC angeordnete SCCP-Verbindungsaufbaueinheit zum Aufbauen einer SCCP-Verbindung zwischen einem Zugangsnetz und einem Kernnetz für den VPCS; **gekennzeichnet durch**
eine in dem BSS und der MSC angeordnete Paging-Einheit zum Paging der angerufenen MS des VPCS über einen Paging-Kanal PCH;
eine in der MSC und dem BSS angeordnete Gruppenanrufkanal-Vergabeeinheit zum Zuteilen eines Gruppenanrufkanals zum Übertragen von Informationen für die anrufende MS und Vergeben des für die anrufende MS zugeteilten Gruppenanrufkanals an die anrufende MS gemäß dem dedizierten Signalisierungskanal und der SCCP-Verbindung; Zuteilen eines Gruppenanrufkanals zum Empfangen von Informationen für die angerufene MS und Vergeben des für die angerufene MS zugeteilten Gruppenanrufkanals an die angerufene MS, nachdem die Paging-Einheit die angerufene MS gepaged hat, und Anweisen der anrufenden MS und der angerufenen MS, den VPCS **durch** die jeweils für sie zugeteilten Gruppenanrufkanäle durchzuführen, nachdem die Vergabe abgeschlossen ist.

18. Einrichtung nach Anspruch 17, ferner umfassend ein VLR zum Speichern von VPCS-Informationen, Prüfen des aktuellen VPCS und Anweisen der Paging-Einheit und der Gruppenanrufkanal-Vergabeeinheit, den VPCS durchzuführen, nachdem der VPCS die Prüfung besteht.

19. Einrichtung nach Anspruch 17, ferner umfassend eine Überwachungseinheit des Private Call Service zum Überwachen, ob die PTT-Taste aktiviert ist; und wenn die PTT-Taste aktiviert ist, Behandeln der durch die PTT-Taste eingegebenen Nummer als die angerufene Nummer und Einleiten des VPCS zu der Netzseite.

20. Basisstations-Subsystem bzw. BSS, umfassend:
eine Dedizierter-Signalisierungskanal-Vergabeeinheit zum Vergeben eines dedizierten Signalisierungskanals an einen Voice Private Call Service bzw. VPCS;
**gekennzeichnet durch**
eine Paging-Einheit zum Paging der angerufenen MS des VPCS über einen Paging-Kanal bzw. PCH;
eine Gruppenanrufkanal-Vergabeeinheit zum Zuteilen eines Gruppenanrufkanals zum Übertragen von Informationen für die anrufende MS und Vergeben des für die anrufende MS zugeteilten Gruppenanrufkanals an die anrufende MS; Zuteilen eines Gruppenanrufkanals zum Empfangen von Informationen für die angerufene MS und Vergeben des für die angerufene MS zugeteilten Gruppenanrufkanals an die angerufene MS, nachdem die Paging-Einheit die angerufene MS gepaged hat.

21. Mobilvermittlungsstelle bzw. MSC, umfassend:
eine Aufbaueinheit für Verbindungen des Signalling Connection Control Part bzw. SCCP zum Aufbauen einer SCCP-Verbindung zwischen einem Zugangsnetz und einem Kernnetz für einen Voice Private Call Service bzw. VPCS; **gekennzeichnet durch** eine Paging-Einheit zum Paging der angerufenen MS des VPCS über einen Paging-Kanal bzw. PCH;
eine Gruppenanrufkanal-Vergabeeinheit zum Senden einer Anforderung zum Zuteilen eines Gruppenanrufkanals für die anrufende MS zum Übertragen von Informationen und Vergeben des für die anrufende MS zugeteilten Gruppenanrufkanals an die anrufende MS; Senden einer Anforderung zum Zuteilen eines Gruppenanrufkanals für die angerufene MS zum Empfangen von Informationen und Vergeben des für die angerufene MS zugeteilten Gruppenanrufkanals an die angerufene MS, nachdem die Paging-Einheit die angerufene MS gepaged hat; und
Anweisen der anrufenden MS und der angerufenen MS, den VPCS **durch** die jeweils für sie zugeteilten Gruppenanrufkanäle durchzuführen, nachdem die Vergabe abgeschlossen ist.

## Revendications

1. Procédé pour mettre en oeuvre un service d'appel vocal privé (VPCS) applicable dans un système interurbain numérique basé sur le système mondial de communications mobiles (GSM), comprenant l'étape consistant à :
affecter un canal d'appel de groupe à une station mobile (MS) appelante pour transmettre des informations en réponse à l'amorçage d'un service VPCS par la MS appelante ;
**caractérisé par** les étapes consistant à :
rechercher une MS appelée par l'intermédiaire d'une voie de recherche de personne (PCH) ;
affecter un canal d'appel de groupe à la MS appelée pour recevoir les informations ; et
connecter la MS appelante et la MS appelée par l'intermédiaire du canal d'appel de groupe affecté à la MS appelante et au canal d'appel de groupe affecté à la MS appelée.

2. Procédé selon la revendication 1, dans lequel l'affectation d'un canal d'appel de groupe à une MS appelante pour transmettre des informations, en réponse à l'amorçage d'un service VPCS par la MS appelante comprend les étapes consistant à :
demander, par la MS appelante, à un réseau d'accès d'affecter un canal de signalisation dédié à la MS appelante ;
demander, par l'intermédiaire du canal de signalisation dédié, au réseau d'accès, d'établir une connexion SCCP (Signalling Connection Control Part) entre le réseau d'accès et un réseau fédérateur ; et
affecter, du côté réseau, via le canal de signalisation dédié et la connexion SCCP, le canal d'appel de groupe à la MS appelante pour transmettre des informations.

3. Procédé selon la revendication 2, dans lequel :
la demande au réseau d'accès d'affecter le canal de signalisation dédié à la MS appelante comprend l'étape consistant à :
envoyer, par la MS appelante, par l'intermédiaire d'une touche de conversation (PTT), un message de demande de canal à un sous-système radio (BSS) ; et
la demande au réseau d'accès d'établir de la connexion SCCP entre le réseau d'accès et le réseau fédérateur par l'intermédiaire du canal de signalisation dédié comprend l'étape consistant à :
affecter, par le BSS, le canal de signalisation dédié à la MS appelante ;
amorcer, par la MS appelante, le service VPCS au niveau du BSS par l'intermédiaire du canal de signalisation dédié ; et
demander, par le BSS, à un centre de commutation du service des mobiles (MSC) du réseau fédérateur d'établir la connexion SCCP du service VPCS entre le BSS et le MSC.

4. Procédé selon la revendication 3, dans lequel l'amorçage du service VPCS au niveau du BSS par l'intermédiaire du canal de signalisation dédié comprend l'étape consistant à :
envoyer, par la MS appelante, par l'intermédiaire du canal de signalisation dédié, au BSS, un message contenant le numéro appelant et le numéro appelé, où le type du message envoyé depuis la MS appelante est un service VPCS.

5. Procédé selon la revendication 4, dans lequel le numéro appelant comprend :
un numéro de réseau privé virtuel (VPN) et un numéro court de VPN, ou un numéro RNIS de station mobile ISDN (MSISDN) ; et
le numéro appelé comprend :
un numéro de réseau privé virtuel (VPN) et un numéro court de VPN, ou un numéro RNIS de station mobile ISDN (MSISDN).

6. Procédé selon la revendication 2, 3, 4 ou 5, dans lequel, lorsque la MS appelante et la MS appelée se trouvent dans une même cellule,
l'affectation du canal d'appel de groupe à la MS appelante via le canal de signalisation dédié et la connexion SCCP comprend l'étape consistant à :
allouer le canal d'appel de groupe pour la MS appelante via le canal de signalisation dédié et la connexion SCCP, et affecter le canal d'appel de groupe à la MS appelante ; et
le processus de recherche de la MS appelée par l'intermédiaire de la PCH comprend les étapes consistant à :
rechercher la MS appelée par l'intermédiaire de la PCH, et affecter le canal d'appel de groupe alloué pour la MS appelante à la MS appelée à la réception d'un message de réponse de recherche retourné par la MS appelée.

7. Procédé selon la revendication 6, comprenant en outre les étapes consistant à :
libérer le canal de signalisation dédié et effacer la connexion SCCP après que le canal d'appel de groupe a été affecté à la MS appelante.

8. Procédé selon la revendication 2, 3, 4 ou 5, dans lequel la MS appelante et la MS appelée sont respectivement situées dans des cellules différentes,
l'affectation du canal d'appel de groupe à la MS appelante via le canal de signalisation dédié et la connexion SCCP comprennent les étapes consistant à :
allouer, via le canal de signalisation dédié et la connexion SCCP, le canal d'appel de groupe dans la cellule appelante pour la MS appelante, et affecter le canal d'appel de groupe à la MS appelante ;
la recherche de la MS appelée par l'intermédiaire de la PCH comprend les étapes consistant à :
rechercher la MS appelée par l'intermédiaire de la PCH, établir un canal de signalisation dédié appelé, établir une connexion SCCP appelée à la réception d'un message de réponse de recherche provenant de la MS appelée, et allouer un canal d'appel de groupe pour la MS appelée dans la cellule appelée par l'intermédiaire du canal de signalisation dédié appelé et de la connexion SCCP appelée ; et
l'affectation du canal d'appel de groupe à la MS appelée pour recevoir les informations comprend l'étape consistant à :
affecter le canal d'appel de groupe alloué pour la MS appelée à la MS appelée dans la cellule appelée.

9. Procédé selon la revendication 8, dans lequel :
l'affectation du canal d'appel de groupe dans la cellule appelante pour la MS appelante comprend les étapes consistant à :
acquérir, par le MSC du réseau fédérateur, un numéro de MS appelante à partir d'un enregistreur de localisation des visiteurs (VLR), et amorcer une demande d'affectation de canal d'appel de groupe au BSS du réseau d'accès ;
allouer, par le BSS, le canal d'appel de groupe pour la MS appelante, et retourner au MSC un message de réponse ; et
l'affectation du canal d'appel de groupe à la MS appelante comprend les étapes consistant à :
envoyer, par le MSC, au BSS, une demande pour affecter le canal d'appel de groupe alloué pour la MS appelante à la MS appelante ; et affecter, par le BSS, le canal d'appel de groupe alloué pour la MS appelante à la MS appelante en délivrant une commande d'affectation à la MS appelante.

10. Procédé selon la revendication 8, dans lequel :
la recherche de la MS appelée par l'intermédiaire du PCH comprend les étapes consistant à :
donner pour instruction, par le MSC du réseau fédérateur, au BSS du réseau d'accès, de rechercher la MS appelée après que la MSC du réseau fédérateur a acquis un numéro de MS appelée auprès du VLR ;
interagir, au moyen du BSS, avec la MS appelée pour implémenter la procédure de recherche, et retourner au MSC le message de réponse de recherche ; et
l'allocation du canal d'appel de groupe pour la MS appelée dans la cellule appelée comprend les étapes consistant à :
donner pour instruction, par le MSC, au BSS d'allouer un canal d'appel de groupe pour la MS appelée dans la cellule appelée, et affecter, par l'intermédiaire d'une commande d'affectation, le canal d'appel de groupe alloué pour la MS appelée à la MS appelée dans la cellule appelée.

11. Procédé selon la revendication 8, comprenant en outre les étapes consistant à :
libérer le canal de signalisation dédié appelé et effacer la connexion SCCP appelée après que le canal d'appel de groupe alloué pour la MS appelée a été affecté à la MS appelée dans la cellule appelée.

12. Procédé selon la revendication 2, 3, 4 ou 5, dans lequel le canal de signalisation dédié est un canal de signalisation dédié indépendant (SDCCH) ou un canal de trafic (TCH) dans le GSM.

13. Procédé selon la revendication 2, 3, 4 ou 5, dans lequel le canal de signalisation dédié est un canal TCH dans le GSM ; le canal TCH étant traité comme étant le canal d'appel de groupe ; et le canal TCH étant affecté à la MS appelante pour la transmission d'informations.

14. Procédé selon la revendication 1, 2, 3, 4 ou 5, comprenant en outre l'étape consistant à :
générer des informations de référence d'appel de groupe temporaire pour la MS appelante et la MS appelée du service VPCS en cours ; où la MS appelante et la MS appelée sont traitées comme un appel de groupe temporaire au cours du service VPCS.

15. Procédé selon la revendication 1, 2, 3, 4 ou 5, comprenant en outre les étapes consistant à :
effacer toutes les connexions qui ont été établies et libérer toutes les ressources de canal occupées lors d'un échec de l'établissement du service VPCS.

16. Procédé selon la revendication 15, dans lequel l'échec de l'établissement du service VPCS comprend : le fait de ne pas réussir à affecter le canal d'appel de groupe à la MS appelante, de ne pas réussir à affecter le canal d'appel de groupe à la MS appelée, ou de ne pas réussir à rechercher la MS appelée.

17. Dispositif pour mettre en oeuvre un service d'appel vocal privé (VPCS) applicable dans un système interurbain numérique GSM, comprenant :
une unité d'affectation de canal de signalisation dédié, située dans un BSS, pour affecter un canal de signalisation dédié au service VPCS ;
une unité d'établissement de connexion SCCP, située dans un MSC, pour établir une connexion SCCP entre un réseau d'accès et un réseau fédérateur pour le service VPCS ;
**caractérisé par**
une unité de recherche, située dans le BSS et le MSC, pour rechercher la MS appelée du VPCS par l'intermédiaire d'une voie de recherche de personne, PCH ;
une unité d'affectation de canal d'appel de groupe, située dans le MSC et le BSS, pour allouer pour la MS appelante un canal d'appel de groupe pour transmettre des informations, et affecter le canal d'appel de groupe pour la MS appelante à la MS appelante, conformément au canal de signalisation dédié et à la connexion SCCP ;
allouer pour la MS appelée un canal d'appel de groupe pour recevoir des informations, et affecter le canal d'appel de groupe alloué pour la MS appelée à la MS appelée, après que l'unité de recherche a recherché la MS appelée ; et donner pour instruction à la MS appelante et à la MS appelée de mettre en oeuvre le service VPCS par l'intermédiaire des canaux d'appel de groupe respectivement alloués pour elles après que l'affectation a été effectuée.

18. Dispositif selon la revendication 17, comprenant en outre un VLR pour stocker des informations de service VPCS, vérifier le service VPCS en cours, et donner pour instruction à l'unité de recherche et à l'unité d'affectation de canal d'appel de groupe de mettre en oeuvre le service VPCS après que le service VPCS a été vérifié avec succès.

19. Dispositif selon la revendication 17, comprenant en outre une unité de surveillance de service d'appel privé pour surveiller si la touche PTT est activée ; et, si la touche PTT est activée, traiter le numéro entré par l'intermédiaire de la touche PTT comme étant le numéro appelé, et initier le service VPCS du côté réseau.

20. Sous-système radio (BSS) comprenant :
une unité d'affectation de canal de signalisation dédié, pour affecter un canal de signalisation dédié à un service d'appel vocal privé (VPCS) ;
**caractérisé par** :
une unité de recherche, pour rechercher la MS appelée du service VPCS par l'intermédiaire d'une voie de recherche de personne (PCH) ;
une unité d'affectation de canal d'appel de groupe, pour allouer, pour la MS appelante, un canal d'appel de groupe pour transmettre des informations, et affecter le canal d'appel de groupe alloué pour la MS appelante à la MS appelante ; allouer, pour la MS appelée, un canal d'appel de groupe pour recevoir des informations, et affecter le canal d'appel de groupe alloué pour la MS appelée à la MS appelée, après que l'unité de recherche a recherché la MS appelée.

21. Centre de commutation du service des mobiles (MSC), comprenant :
une unité d'établissement de connexion SCCP (Signalling Connection Control Part), pour établir une connexion SCCP entre un réseau d'accès et un réseau fédérateur pour un service d'appel vocal privé (VPCS) ;
**caractérisé par** :
une unité de recherche, pour rechercher la MS appelée du VPCS par l'intermédiaire d'une voie de recherche de personne (PCH) ;
une unité d'affectation de canal d'appel de groupe, pour envoyer une demande pour allouer un canal d'appel de groupe pour la MS appelante pour transmettre des informations, et affecter le canal d'appel de groupe alloué pour la MS appelante à la MS appelante ; envoyer une demande pour allouer un canal d'appel de groupe pour la MS appelée pour recevoir des informations, et affecter le canal d'appel de groupe alloué pour la MS appelée à la MS appelée, après que l'unité de recherche a recherché la MS appelée ; et donner pour instruction à la MS appelante et à la MS appelée de mettre en oeuvre le service VPCS par l'intermédiaire des canaux d'appel de groupe respectivement alloués pour elles après que l'affectation a été effectuée.
